# EUROPÄISCHE PATENTSCHRIFT

(11) **EP 2 013 508 B1**
(45) Veröffentlichungstag und Bekanntmachung des Hinweises auf die Patenterteilung: **16.06.2010**
(21) Anmeldenummer: 07724191.7
(22) Anmeldetag: 12.04.2007
(51) Int. Cl.: F16D 65/12, F16D 65/847

(54) **BREMSSCHEIBE**
BRAKE DISK
DISQUE DE FREIN

(30) Priorität: 13.04.2006 DE 102006017526; 27.07.2006 DE 102006034763
(43) Veröffentlichungstag der Anmeldung: 14.01.2009
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE)
(74) Vertreter: Mattusch, Gundula
(86) Internationale Anmeldenummer: PCT/EP2007/003250
(87) Internationale Veröffentlichungsnummer: WO 2007/118665

(56) Entgegenhaltungen:
- WO-A-02/087901
- DE-A1- 19 628 331
- DE-C1- 19 751 522
- DE-U1- 9 406 595

## Beschreibung

Die Erfindung betrifft eine Bremsscheibe nach dem Oberbegriff des Anspruchs 1.

Zum Stand der Technik werden die DE 197 26 674 A1, die DE 198 07 184 C1, die DE 197 51 522 C1 und die DE 195 44 559 C1 genannt. Zur Verbindung der Bremsscheibe mit der Nabe sind bei diesen Bremsscheiben Zwischenelemente zur Drehmoment- und Kraftübertragung von den Nocken der Nabe auf die Abstützelemente der Scheibe vorgesehen, welche z.B. durch Bolzen an den Nocken der Nabe befestigbar sind. Dabei greifen einerseits die Nocken der Nabe in die Zwischenelemente und andererseits die Zwischenelemente in die Abstützelemente ein, so daß in beiden Drehrichtungen eine sichere Drehmomentübertragung von der Bremsscheibe auf die Nabe gewährleistet ist. WO-A-02/087901 zeigt eine Bremsscheibe mit Nabe gemäß dem Oberbegriff des Anspruchs 1.

Die Bremsscheibe der DE 195 44 559 C1 hat sich an sich bewährt, wünschenswert ist aber eine weiter optimierte Kühlung des Nabenbereiches.

Die Lösung dieses Probleme ist das Ziel der vorliegenden Erfindung.

Die Erfindung erreicht dieses Ziel durch den Gegenstand des Anspruch 1.

Danach ist der Scheibenabschnitt mit sich axial erstreckenden Abstützstegen versehen, die sich bis in den Bereich erstrecken, in dem die Bremsscheibe auf dem topfartigen Abschnitt sitzt und die als die Nocken dienen, die zwischen die Abstützelemente der Bremsscheibe greifen und diese auf der Nabe in Umfangsrichtung sichern, wobei die Abstützstege radial innerhalb der Bremsscheibe bzw. innerhalb des Bremsscheibenringes nicht oder nur über schmale Verbindungsstege radial mit dem Außenumfang des topfartigen Abschnitts verbunden sind, im letzteren Fall vorzugsweise derart, dass sich in einer Seitenansicht eine T-Form der Abstützstege mit den Verbindungsstegen ergibt, so dass sich radial innen zu den Abstützstegen und den Abstützelementen Strömungskanäle für Luft ausbilden.

Vorteilhafte Ausgestaltungen sind den Unteransprüchen zu entnehmen.

Die Erfindung verbessert gegenüber dem gattungsgemäßen Stand der Technik die deutlich die Kühlung der Nabe Bremsscheibe, da sie eine erhöhte Luftzufuhr in den Nabenbereich erlaubt. Sie verringert zudem die Wärmeleitung von der Bremsscheibe durch die Nocken in den inneren Nabenbereich.

Die bevorzugt gewählte axiale Fixierung ist besonders kostengünstig und in der Regel einfach montierbar und demontierbar.

Weitere vorteilhafte Varianten der Erfindung sind den übrigen Unteransprüchen zu entnehmen.

Nachfolgend wird die Erfindung unter Bezug auf die Zeichnung anhand von Ausführungsbeispielen näher beschrieben. Es zeigt:
- Fig. 1: eine perspektivische Ansicht einer Bremsscheibe an einer Nabe;
- Fig. 2: eine perspektivische Ansicht der Nabe aus Fig. 1;

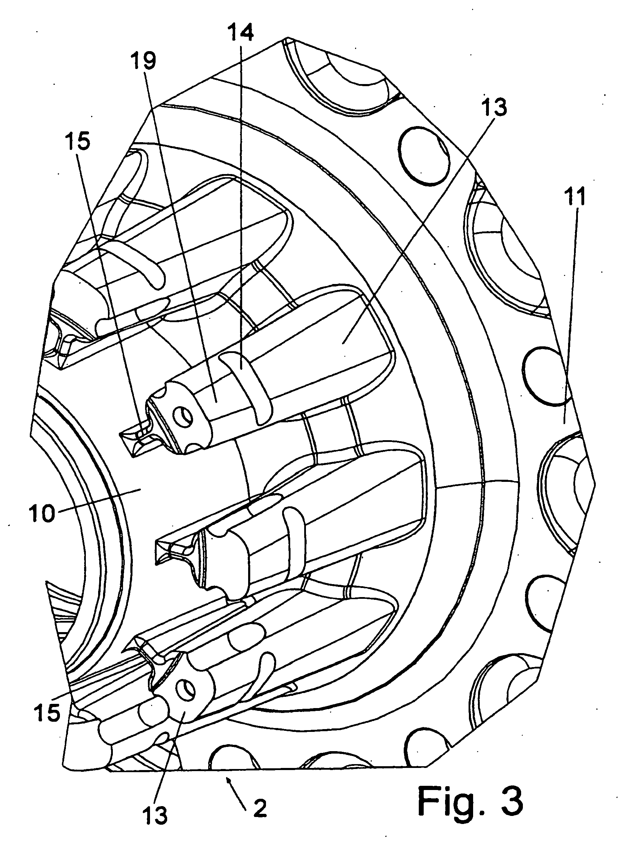

- Fig. 3: eine teilgeschnittene Ansicht der Nabe aus Fig. 2 in vergrößerter Darstellung;

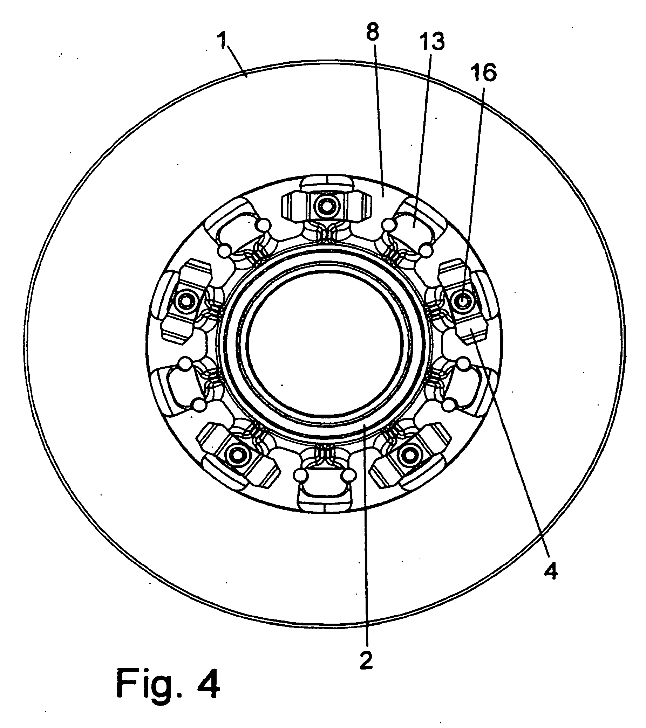

- Fig. 4: eine Draufsicht auf die Anordnung aus Fig. 1;

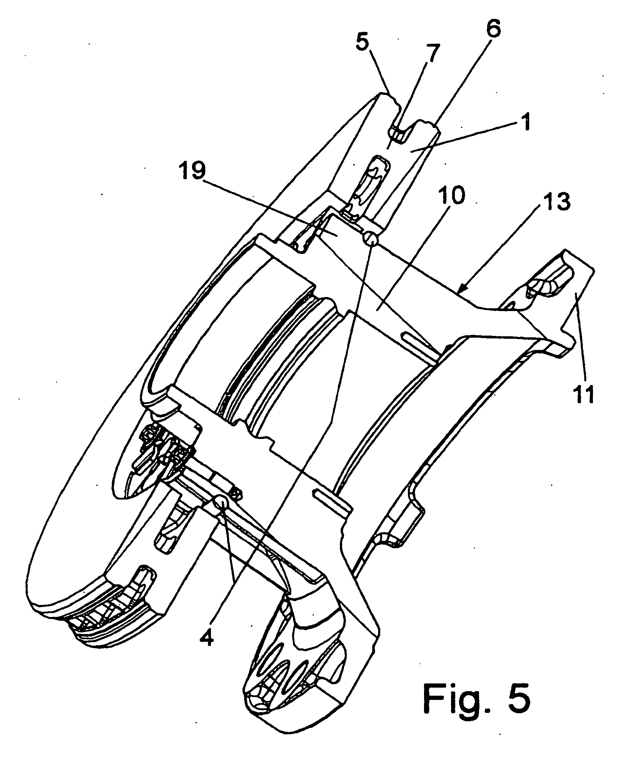

- Fig. 5: eine teilgeschnittene Ansicht der Anordnung aus Fig. 1; und
- Fig. 6: eine weitere perspektivische Ansicht eines Nabenbereichs mit Befestigungsmitteln für eine Bremsscheibe.

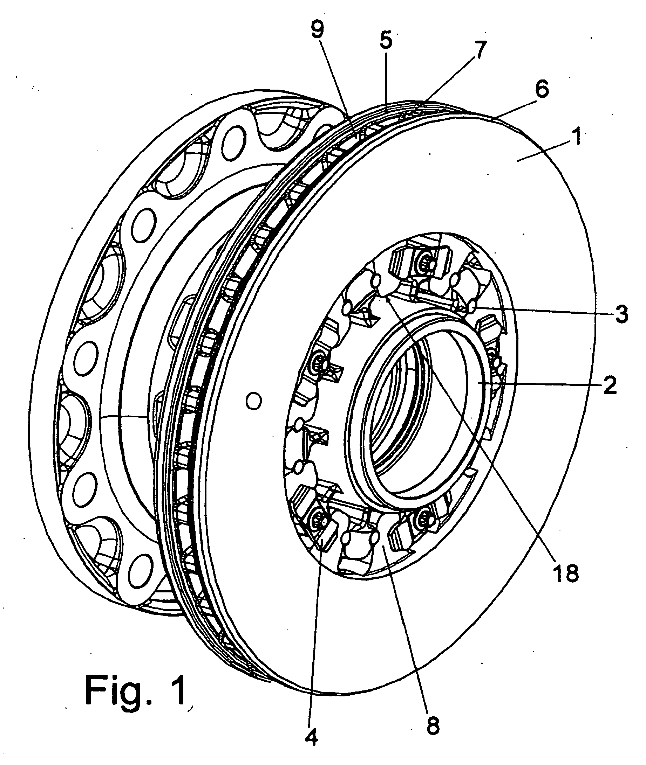

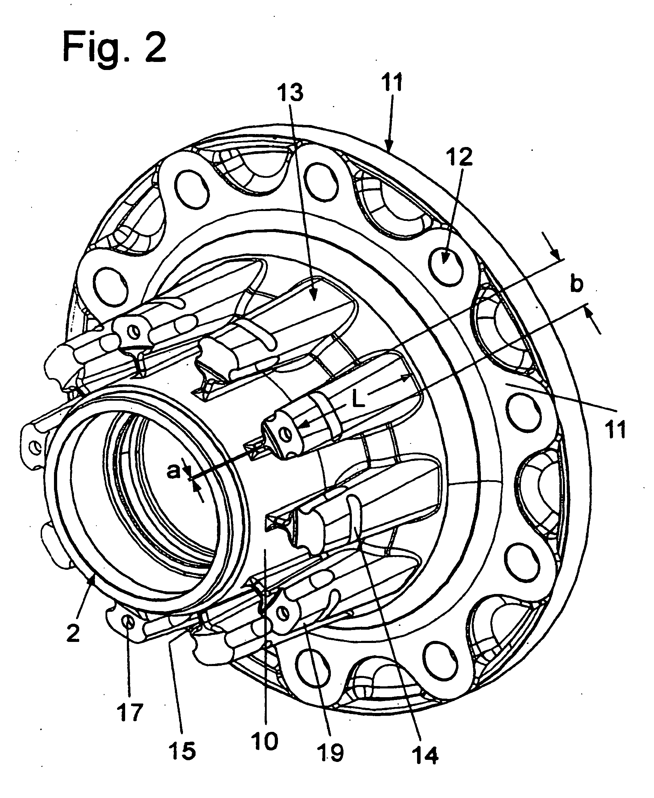

Fig. 1 und 2 zeigen eine Scheiben-/Nabenverbindung mit einer Bremsscheibe 1, einer Scheiben- und(/oder) Radnabe 2, einer Vielzahl von Zwischenelementen 3 und Sicherungselementen 4.

Die insbesondere für schwere Nutzfahrzeuge mit pneumatischen Scheibenbremsen geeignete, innenbelüftete Bremsscheibe der Fig. 1 weist zwei Reibringe 5, 6 auf, die über Verbindungsstege 7 miteinander verbunden sind. An den Innenumfang der Bremsscheibe 1 sind Abstützelemente 8 angeformt, welche im wesentlichen trapezförmig vom Innenumfang der Reibringe 5, 6 nach innen vorstehen. Während der Fahrt erfolgt eine Kühlluftzufuhr zwischen den Abstützelementen 8 in den Luftspalt 9 zwischen den Reibringen 5,6.

Die Radnabe 2 der Fig. 1 und 2 besteht aus einem topfartigen, hohlzylindrischen Abschnitt 10, der an einem seiner axialen Enden in einen flansch- bzw. ringartigen, sich radial vom Topfabschnitt 10 nach außen erstreckenden Scheibenabschnitt 11 übergeht, an dessen Außenumfang Bohrungen 12 für (hier nicht abgebildete) Radbolzen verteilt sind. Der Scheibenabschnitt 11 ist mit sich axial zum Scheibenabschnitt 11 erstreckenden Abstützstegen 13 versehen, die sich bis in den Bereich erstrecken, in dem die Bremsscheibe 1 auf dem topfartigen Abschnitt 10 sitzt. Dabei dienen die Endbereiche der Abstützstege 13 als Nocken 19, die zwischen die Abstützelemente 8 der Bremsscheibe 1 greifen und diese auf der Nabe in Umfangsrichtung sichern bzw. festlegen, um ein Drehmoment zwischen der Nabe 2 und der Bremsscheibe 1 zu übertragen.

Zwischen den Abstützelementen 8 und den Abstützstegen 13 sind hier die Zwischenelemente 3 verteilt, die in bevorzugter Ausgestaltung als U-förmige Drahtbügel ausgebildet sind.

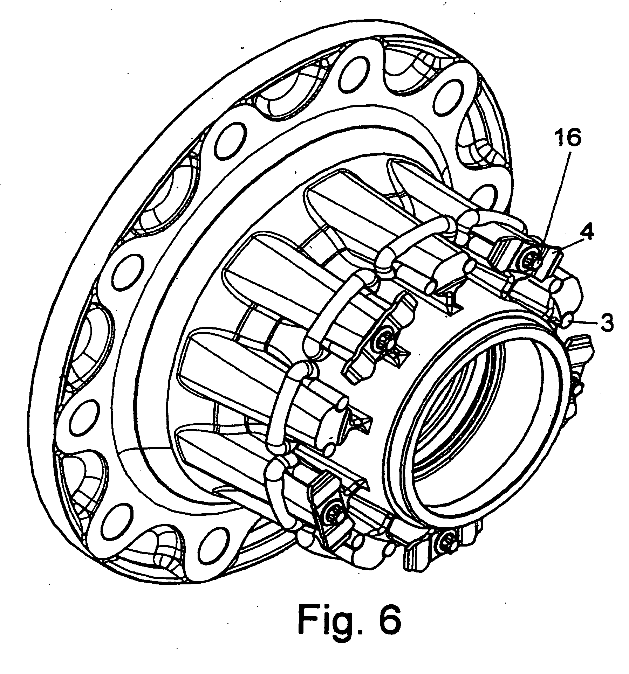

Bei dem dargestellten Ausführungsbeispiel sitzen die Drahtbügel 3 in der Nut 14. Die Elemente 4 sichern die Bremsscheibenposition mittels Schrauben 16 zur Fahrzeuginnenseite und verspannen gleichzeitig über ihre Federwirkung die Bremsscheibe gegen Vorsprünge an den Drahtbügeln (siehe Figur 6, welche die Drahtbügel 6 und die Elemente 4 zeigen).

Dadurch, dass die Abstützstege 13 über ihre gesamte Länge bis zum Scheibenabschnitt 11 hin einen im wesentlichen konstanten oder sich sogar vergrößernden Querschnitt aufweisen, werden alle oder zumindest die wesentlichen Kräfte bei einer Bremsung direkt in den Scheibenabschnitt 11 eingeleitet.

Dies ermöglicht es, die Abstützstege 13 radial innerhalb der Erstreckung der Bremsscheibe gar nicht oder nur über schmale Verbindungsstege 15 radial mit dem Außenumfang des topfartigen Abschnitts zu verbinden. "Schmal" bedeutet in diesem Zusammenhang, dass die Verbindungsstege 15 in Umfangsrichtung eine Erstreckung a aufweisen, die weniger als 50%, insbesondere weniger als 25 % der Erstreckung der Abstützstege 13 in diesem Bereich beträgt. Die Verbindungsstege 15 und die Abstützstege 13 bzw. die Nocken 13 bilden in einer axialen Draufsicht damit eine Art T-Form aus.

Auf diese Weise werden radial innerhalb der Abstützstege 13 der Nabe und radial innerhalb der Abstützelemente 8 der Scheibe groß dimensionierte Strömungskanäle 18 definiert, die es ermöglichen, den Nabenbereich innerhalb der Bremsscheibe 1 gut zu kühlen, wobei durch die schmalen Verbindungsstege 15 auch die Wärmeeinleitung in die Nabe 2 radial innerhalb der Bremsscheibe 1 reduziert wird, was eine Lageranordnung in der Nabe 2 quasi doppelt vor übermäßiger Erwärmung bei Bremsungen schützt.

Vorteilhaft ist dabei, wenn sich die Strömungskanäle 18 für Luft seitlich bis zum scheibenartigen Abschnitt 11 fortsetzen.

### Bezugszeichenliste

- Bremsscheibe: 1
- Scheiben- und Radnabe: 2
- Zwischenelemente: 3
- Sicherungselement: 4
- Reibringe: 5, 6
- Stege: 7
- Abstützelemente: 8
- Luftspalt: 9
- hohlzylindrischer Abschnitt: 10
- Scheibenabschnitt: 11
- Bohrungen: 12
- Abstützstege: 13
- Verbindungsstege: 14
- Stege: 15
- Schrauben: 16
- Strömungskanäle: 18
- Nocken: 19

## Patentansprüche

1. Bremsscheibe mit Nabe
wobei die Bremsscheibe (1) Reibringe (5, 6) aufweist, die über Verbindungsstege (14) miteinander verbunden sind, wobei:
a) die Bremsscheibe (1) weist am inneren Umfangsbereich Abstützelemente (8) auf und die Nabe (2) ist mit Nocken (19) versehen, die in Umfangsrichtung zwischen die Abstützelemente (8) greifen und diese auf der Nabe (2) in Umfangsrichtung sichern,
b) die Nabe (2) weist einen topfartigen, hohlzylindrischen Abschnitt (10) auf, der in einen sich radial nach außen erstreckenden Scheibenabschnitt (11) übergeht,
c) der Scheibenabschnitt (11) mit sich axial erstreckenden Abstützstegen (13) versehen ist, die sich bis in den Bereich erstrecken, in dem die Bremsscheibe (1) auf dem topfartigen Abschnitt (10) sitzt und die in die Nocken (19) übergehen,
d) wobei die Abstützstege (13) radial innerhalb der Erstreckung der Bremsscheibe nicht oder nur über schmale Verbindungsstege (15) radial mit dem Außenumfang des topfartigen Abschnitts verbunden sind, so dass sich radial innen zu den Abstützstegen (13) und den Abstützelementen (8) Strömungskanäle (18) für Luft ausbilden,
**dadurch gekennzeichnet, dass**
e) die Verbindungsstege (15) in Umfangsrichtung eine Erstreckung (a) aufweisen, die weniger als 20 % der Erstreckung (b) der Abstützstege (13) in Umfangsrichtung in diesem Bereich beträgt.

2. Bremsscheibe mit Nabe nach Anspruch 1, **dadurch gekennzeichnet, dass** die Abstützstege (13) über ihre gesamte Länge (L) bis zum Scheibenabschnitt (11) einen im wesentlichen konstanten oder sich vergrößernden Querschnitt aufweisen.

3. Bremsscheibe mit Nabe nach Anspruch 1 oder 2, **dadurch gekennzeichnet, dass** die Abstützstege (13) derart geformt sind, dass sämtliche oder zumindest die wesentlichen Kräfte bei einer Bremsung direkt in den Scheibenabschnitt (11) eingeleitet werden.

4. Bremsscheibe mit Nabe nach einem der vorstehenden Ansprüche, **dadurch gekennzeichnet, dass** sich die Strömungskanäle (18) für Luft seitlich bis zum scheibenartigen Abschnitt (11) fortsetzen.

5. Bremsscheibe mit Nabe nach einem der vorstehenden Ansprüche, **dadurch gekennzeichnet, dass** zwischen den Abstützelementen (8) und den Abstützstegen (13) Zwischenelemente (3) verteilt sind.

6. Bremsscheibe mit Nabe nach Anspruch 5, **dadurch gekennzeichnet, daß** die Zwischenelemente (3) U-förmig ausgebildet sind.

7. Bremsscheibe mit Nabe nach einem der Ansprüche 5 oder 6, **dadurch gekennzeichnet, daß** die Zwischenelemente (3) als Drahtbügelelemente ausgebildet sind.

8. Bremsscheibe mit Nabe nach einem der Ansprüche 5 bis 7, **dadurch gekennzeichnet, dass** die Zwischenelemente (3) als u-förmige Drahtbügel ausgebildet sind, die in Nuten (14) in den Abstützstegen (13) eingreifen.

## Claims

1. A brake disc (1) having a hub (2), wherein the brake disc has friction rings (5, 6) which are connected by means of connecting webs (14), wherein:
a) the brake disc (1) has support elements (8) at the inner peripheral region, and the hub (2) is provided with cams (19) which engage in the peripheral direction between the support elements (8) and secure these on the hub (2) in the peripheral direction,
b) the hub (2) has a pot-like, hollow cylindrical section (10) which merges into a radially outwardly extending disc section (11),
c) the disc section (11) is provided with axially extending support webs (13) which extend into the region in which the brake disc (1) is seated on the pot-like section (10), and which merge into the cams (19),
d) wherein, radially within the extent of the brake disc, the support webs (13) are not connected, or are connected only by means of narrow connecting webs (15), radially to the outer periphery of the pot-like section, such that flow ducts (18) for air form radially inward with respect to the support webs (13) and the support elements (8),
**characterised in that**
e) the connecting webs (15) have an extension (a) in the peripheral direction, which is smaller than 20% of the extension (b) of the support webs (13) in the peripheral direction in this region.

2. The brake disc having a hub as claimed in claim 1, **characterised in that** support webs (13) have a substantially constant cross section, or a cross section which increases in size, over their entire length (L) up to the disc section (11).

3. The brake disc having a hub as claimed in claim 1 or 2, **characterised in that** support webs (13) are shaped such that all of the forces, or at least the significant forces are introduced directly into the disc section (11) during a braking operation.

4. The brake disc having a hub as claimed in one of the preceding claims, **characterised in that** the flow ducts (18) for air extend laterally up to the disc-like section (11).

5. The brake disc having a hub as claimed in one of the preceding claims, **characterised in that** intermediate elements (3) are distributed between the support elements (8) and the support webs (13).

6. The brake disc having a hub as claimed in claim 5, **characterised in that** the the intermediate elements (3) are of U-shaped design.

7. The brake disc having a hub as claimed in one of claims 5 or 6, **characterised in that** the intermediate elements (3) are formed as wire clamp elements.

8. The brake disc having a hub as claimed in one of claims 5 to 7, **characterised in that** the intermediate elements (3) are formed as U-shaped wire clamps which engage into grooves (14) in the support webs (13).

## Revendications

1. Disque de frein à moyeu, dans lequel le disque de frein (1) comprend des anneaux à friction (5, 6) relié l'un à l'autre via des entretoises de liaison (14), dans lequel :
(a) ledit disque de frein (1) est pourvu des éléments d'appui (8) à un secteur périphérique intérieur et ledit moyeu (2) est pourvu des cames (19) entrant en prise entre lesdits éléments d'appui le long de la direction périphérique, en fixant ces éléments au moyeu (2) le long de la direction périphérique,
(b) ledit moyeu (2) présente une partie creuse cylindrique en pot (10), qui se confonde en une partie de disque (11) s'étendant en sens radial vers l'extérieur,
(c) ladite partie de disque (11) est pourvue des entretoises d'appui (13) à étendue axiale, qui s'étendent jusque dans la région, où le disque de frein (1) repose sur ladite partie en pot (10), et qui se confondent en lesdites cames (19),
(d) audites entretoises d'appui (13) n'étant pas reliées en sens radial ou n'étant reliées en sens radial que via des entretoises de liaison (15) étroites à ladite périphérie extérieure de ladite partie en pot en sens radial au-dedans de l'étendue du disque de frein, d'une telle manière, que des lumières d'écoulement (18) d'air soient formées en sens radial vers l'intérieur vers lesdites entretoises d'appui (13) et lesdits éléments d'appui (8),
**caractérisé en ce que**
(e) lesdites entretoises de liaison (15) présentent une étendue (a) le long de la direction périphérique, qui correspond à moins que 20 % de l'étendue (b) desdites entretoises d'appui (13) le long de la direction périphérique dans cette région.

2. Disque de frein à moyeu selon la revendication 1, **caractérisé en ce que** lesdites entretoises d'appui (13) présentent une section transversale essentiellement constante ou s'élargissant sur toute leur longueur (L) jusqu'à ladite partie de disque (11).

3. Disque de frein à moyeu selon la revendication 1 ou 2, **caractérisé en ce que** lesdites entretoises d'appui (13) sont formées d'une telle façon, que tous les efforts ou au moins les efforts essentiels soient introduit directement dans ladite partie de disque (11) au cas de serrage du frein.

4. Disque de frein à moyeu selon une quelconque des revendications précédentes, **caractérisé en ce que** lesdites lumières d'écoulement (18) d'air se continuent latéralement jusqu'à ladite partie en disque (11).

5. Disque de frein à moyeu selon une quelconque des revendications précédentes, **caractérisé en ce que** des éléments intermédiaires (3) sont distribués entre lesdits éléments d'appui (8) et lesdites entretoises d'appui (13).

6. Disque de frein à moyeu selon la revendication 5, **caractérisé en ce que** lesdits éléments intermédiaires (3) présentent une configuration en U.

7. Disque de frein à moyeu selon une quelconque des revendications 5 ou 6, **caractérisé en ce que** lesdits éléments intermédiaires (3) sont conçus en tant que des éléments en étrier de fil.

8. Disque de frein à moyeu selon une quelconque des revendications 5 à 7, **caractérisé en ce que** lesdits éléments intermédiaires (3) sont configurés sous forme des étriers de fil en U en prise dans des rainures (14) dans lesdites entretoises d'appui (13).
